# EUROPÄISCHE PATENTSCHRIFT

(11) **EP 3 377 740 B1**
(45) Veröffentlichungstag und Bekanntmachung des Hinweises auf die Patenterteilung: **22.03.2023**
(21) Anmeldenummer: 16797909.5
(22) Anmeldetag: 17.11.2016
(51) Int. Cl.: F01P 7/16

(54) **LADEGASKÜHLKREIS UND VERFAHREN ZUM TEMPERIEREN VON LADEGAS**
CHARGE GAS COOLING CIRCUIT AND METHOD FOR CONTROLLING THE TEMPERATURE OF CHARGE GAS
CIRCUIT DE REFROIDISSEMENT DE GAZ DE SURALIMENTATION ET PROCÉDÉ POUR RÉGULER LA TEMPÉRATURE DE GAZ DE SURALIMENTATION

(30) Priorität: 18.11.2015 DE 102015222735
(43) Veröffentlichungstag der Anmeldung: 26.09.2018
(73) Patentinhaber: Volkswagen Aktiengesellschaft, 38440 Wolfsburg (DE)
(72) Erfinder: VELDTEN, Burkhard, 31234 Edemissen (DE); HOFFMANN, Bodo, 38448 Wolfsburg (DE); LOOF, Holger, 38173 Sickte (DE)
(74) Vertreter: MFG Patentanwälte Meyer-Wildhagen Meggle-Freund Gerhard PartG mbB
(86) Internationale Anmeldenummer: PCT/EP2016/077993
(87) Internationale Veröffentlichungsnummer: WO 2017/085181

(56) Entgegenhaltungen:
- DE-A1- 2 610 378
- DE-A1- 2 610 378
- DE-A1- 19 539 604
- DE-A1- 19 539 604
- DE-A1-102005 029 918
- GB-A- 2 178 157
- GB-A- 2 178 157
- GB-A- 2 280 729
- GB-A- 2 280 729
- US-A1- 2003 221 638
- US-A1- 2003 221 638

## Beschreibung

Die vorliegende Erfindung betrifft einen Kühlmittelkreis zum Temperieren von Ladegas für eine Verbrennungskraftmaschine und ein Verfahren zum Temperieren von Ladegas für eine Verbrennungskraftmaschine.

Zur Verbrennung von Kraftstoff wird herkömmlich einem Verbrennungsraum der Verbrennungskraftmaschine Kraftstoff sowie ein Ladegas, welches Umgebungsluft, komprimierte Umgebungsluft und/oder Abgas enthalten kann, zugeführt. Es ist wünschenswert, eine gewisse Dichte des Ladegases zu erreichen, da mit höherer Dichte des Ladegases ein höherer Verbrennungsdurchsatz erreicht werden kann. Aufgrund einer Umgebungstemperatur und/oder einer Abgastemperatur kann das Ladegas jedoch eine relativ geringe Dichte aufweisen, da die Dichte des Ladegases mit zunehmender Temperatur des Ladegases abnimmt. Daher wird in konventionellen Verbrennungskraftsystemen ein Ladegaskühlsystem zum Kühlen des Ladegases eingesetzt. Dabei wird Kühlwasser (oder allgemein ein Kühlmittel) durch eine Zirkulationspumpe zwischen einem wassergekühlten Ladeluftkühler und einem fahrzeugseitigen Kühler (z. B. Niedertemperaturkühler) im Frontend umgewälzt.

Die folgenden Publikationen zeigen Kühlmittelkreise zum Temperieren von Ladegas für Verbrennungskraftmaschinen:
US 2003/221638 A1, GB 2 280 729 A, GB 2 178 157 A, DE 195 39 604 A1, DE 26 10 378 A1 oder DE 10 2005 029918 A1.

Als problematisch hat sich herausgestellt, dass bei niedrigen Umgebungstemperaturen das Kühlwasser aus dem Fahrzeugkühler mit sehr geringen Temperaturen in den Ladeluftkühler eintritt (z. B. kann die Kühleraustrittstemperatur in Niedertemperatur-Systemen ca. 5 °C über der Umgebungstemperatur liegen). Dadurch kann es im Ladeluftkühler zu Kondensationseffekten (Feuchtigkeit aus Abgasrückführung, Motor-Blow-By oder Umgebungsluft) der Ansaugluft und im schlimmsten Fall zu Versottungen oder Vereisungseffekten kommen.

Im Stand der Technik wurde die Wassertemperatur z. B. durch ein stufenlos regelbares 3/2-Wegeventil geregelt. In direkten Ladeluftsystemen sind Bypass-Schaltungen (eine komplette Umgehung des Ladeluftkühlers) oder auch Abdeckungen des Ladeluftkühlers und/oder innere Klappen zur Reduktion der wärmetauschenden Fläche eingesetzt worden.

Ein weiteres herkömmlich auftretendes Problem kann in einem Konflikt zwischen einer Kühlung weiterer Teilnehmer im Kühlkreis und dem indirekten Ladeluftkühlsystem selbst während des Regenerationsbetriebes liegen. Weitere innerhalb des Kühlkreises liegende Komponenten können z. B. ein SCR (selektive katalytische Reaktion)-Ventil sein, welches eine intensive Kühlung und damit eine hohe Ansteuerung der Kühlmittelpumpe erfordern kann. Die Ladeluft sollte in dieser Betriebsart jedoch wenig gekühlt werden und kann somit die Ansteuerung der Kühlmittelpumpe begrenzen.

Ein weiteres im Stand der Technik auftretendes Problem ist der Bauteilschutz des Ladeluftkühlers. Jede Veränderung im Kühlmitteldurchfluss insbesondere bei sehr geringen Außentemperaturen kann zu einer thermischen Belastung des Bauteils und damit zu Auswirkungen auf die Lebensdauer des Bauteils führen.

Ein stufenloses Mischventil, wie es oben beschrieben wurde, ist zudem sehr aufwändig und entsprechend teuer. Ferner bedarf ein solches stufenloses Mischventil einer passenden komplexen Ansteuerhardware im Motorsteuergerät (sogenannte H-Brücke, alternativ eine intelligente Steuerung auf dem Mischventil selber) und benötigt ferner eine Lagerückmeldung sowie einen Wassertemperatursensor, um die Saugrohrtemperaturregelung auf die sich deutlich ändernden Wassertemperaturen dynamisch anpassen zu können.

Eine Aufgabe der vorliegenden Erfindung ist es somit, einen verbesserten Kühlmittelkreis und ein verbessertes Verfahren zum Temperieren von Ladegas für eine Verbrennungskraftmaschine bereitzustellen.

Diese Aufgabe wird durch den Kühlmittelkreis zum Temperieren von Ladegas und durch das Verfahren zum Temperieren von Ladegas für eine Verbrennungskraftmaschine gemäß den unabhängigen Ansprüchen gelöst. Die abhängigen Ansprüche spezifizieren besondere Ausführungsformen der vorliegenden Erfindung.

Gemäß einem Aspekt der vorliegenden Erfindung ist ein Kühlmittelkreis zum Temperieren von Ladegas für eine Verbrennungskraftmaschine bereitgestellt, der ein Thermostatventil aufweist, das dazu ausgelegt ist, einen Kühlmittelstrom auf einen Fahrzeugkühler und eine Umgehungskühlmittelleitung aufzuteilen, der einen Anteil des Kühlmittelstroms am Fahrzeugkühler vorbeiführt, wobei das Thermostatventil auf eine Mischtemperatur reagiert, die auf einer Mischung von Kühlmittel, das den Fahrzeugkühler durchlaufen hat, mit dem Kühlmittel, das an dem Fahrzeugkühler vorbeigeführt wurde, beruht.

Das Thermostatventil kann ferner als Mischkammer fungieren, um das an dem Fahrzeugkühler vorbeigeführte Kühlmittel mit dem Kühlmittel zu mischen, das den Fahrzeugkühler durchlaufen hat. Der Kühlmittelkreis kann einen Ladeluftkühler aufweisen, der dazu ausgelegt ist, Wärme zwischen dem gemischten Kühlmittel und einem Ladegas auszutauschen.

Das Thermostatventil kann die Mischtemperatur in der Mischkammer des Thermostatventils detektieren und darauf basierend den Durchlass/Öffnungsgrad/Schließungsgrad seiner Eingänge und/oder seines Ausgangs steuern. Die Mischtemperatur kann sich aus der Temperatur des an dem Fahrzeugkühler vorbeigeführten Kühlmittels (welches insbesondere über den ersten Eingang des Thermostatventils in die Mischkammer eintreten kann) und der Temperatur des Kühlmittels, das den Fahrzeugkühler durchlaufen hat (welches insbesondere über den zweiten Eingang des Thermostatventils in die Mischkammer eintreten kann), ergeben.

Der Kühlmittelkreis wird von einem Kühlmittel, beispielsweise Wasser, durchströmt, welches das Ladegas kühlen oder aufwärmen kann. Somit kann das Temperieren während einer Zeitspanne ein Kühlen (Erniedrigen der Temperatur des Ladegases) und während einer anderen Zeitspanne ein Aufwärmen (Erhöhen der Temperatur des Ladegases) des Ladegases umfassen.

Die Verbrennungskraftmaschine kann beispielsweise ein Ottomotor oder ein Dieselmotor sein. Das Ladegas kann Umgebungsluft und/oder komprimierte Umgebungsluft und/oder Abgas umfassen.

Der Ladeluftkühler, beispielsweise ein wassergekühlter Ladeluftkühler, kann als ein Leitungssystem bzw. Leitungsgeflecht mit relativ großer (innerer und) äußerer Oberfläche ausgebildet sein. In einem Inneren des Leitungsgeflechts bzw. Leitungssystems kann das Kühlmittel, beispielsweise Wasser, strömen und das (zu temperierende) Ladegas kann über die äußere Oberfläche des Leitungssystems bzw. Leitungsgeflächts zum Austausch von Wärme mit dem Wärmeaustauscher geführt werden.

Der Fahrzeugkühler (allgemeiner ein Kühlmittel-Kühlungsabschnitt) hat die Funktion, das Kühlmittel des Kühlkreislaufes abzukühlen. Bei dem Fahrzeugkühler der Ausführungsform handelt es sich um einen fahrzeugseitigen Kühler im Frontend, der Umgebungsluft ansaugt und damit das Kühlmittel des Kühlmittelkreises kühlt.

Wenn das Kühlmittel über die Umgehungskühlmittelleitung fließt, wird es nicht durch den Kühlmittel-Kühlungsabschnitt gekühlt, sondern fließt (von dem Kühlmittel-Kühlungsabschnitt) ungekühlt zu dem Ladeluftkühler zurück. Das Thermostatventil kann eine Menge (z. B. Massenstrom) des durch die Umgehungskühlmittelleitung fließenden Kühlmittels (z.B. relativ zu einer durch den Kühlmittel-Kühlungsabschnitt strömenden Menge des Kühlmittels) definieren. Je höher eine Temperatur des Kühlmittels ist, umso mehr Kühlmittel kann über den Kühlmittel-Kühlungsabschnitt geführt werden, wie durch eine Einstellung des Thermostatventils definiert sein kann.

Die Umgehungskühlmittelleitung (auch Bypass genannt) des erfindungsgemäßen Kühlmittelkreises wird in der vorliegenden Anmeldung auch als ein "Bypass" bezeichnet. Der Bypass ist dazu ausgelegt, Kühlmittel an dem Fahrzeugkühler zum Austausch von Wärme vorbeizuführen.

Die Umgehungskühlmittelleitung kann von dem Thermostatventil (insbesondere stufenlos) geöffnet und geschlossen werden. Damit kann das Thermostatventil den Kühlmittelstrom auf die Umgehungskühlmittelleitung und den Fahrzeugkühler (z. B. fahrzeugseitigen Kühler) geeignet verteilen. Beide Kühlmittelleitungen, das heißt die Umgehungskühlmittelleitung und eine Leitung, welche zu dem Fahrzeugkühler führt, können durch das Thermostatventil zwischen dem Ventilzustand vollständig geöffnet und vollständig geschlossen geregelt werden.

Wenn Kühlmittel über die Umgehungskühlmittelleitung fließt, wird dieses Kühlmittel nicht durch den Fahrzeugkühler gekühlt, sondern fließt ungekühlt zu dem Ladeluftkühler zurück. Das Thermostatventil kann eine Menge (z. B. Massenstrom) des durch die Umgehungskühlmittelleitung fließenden Kühlmittels (z.B. relativ zu einer durch den Fahrzeugkühler strömenden Menge des Kühlmittels) definieren. In einer Ausführungsform ist das Thermostatventil so eingerichtet, dass, je höher eine Temperatur des Kühlmittels ist, umso mehr Kühlmittel über den Fahrzeugkühler geführt wird.

Das Thermostatventil ist in Strömungsrichtung (Flussrichtung) des Kühlmittels hinter der Umgehungskühlmittelleitung und hinter dem Fahrzeugkühler (z. B. fahrzeugseitigem Kühler) angeordnet und kann als Mischkammer fungieren. Damit können die auf die folgenden Bauteile, z. B. den Ladeluftkühler (in der vorliegenden Anmeldung auch als Ladeluftkühler bezeichnet), wirkenden Thermoschocks vermindert werden.

Erfindungsgemäß weist der Kühlmittelkreis ferner auf:
einen Ladeluftkühler, der dazu ausgelegt ist, Wärme zwischen dem gemischten Kühlmittel und dem Ladegas auszutauschen;
eine Pumpe zum Befördern des Kühlmittels entlang der Strömungsrichtung;
einen ersten Leitungsabschnitt in Strömungsrichtung hinter dem Ladeluftkühler;
ein T-Stück mit einem T-Stück-Eingang und einem ersten und einem zweiten T-Stück-Ausgang, wobei der T-Stück-Eingang mit dem ersten Leitungsabschnitt gekoppelt ist, wobei die Umgehungskühlmittelleitung an den ersten T-Stück-Ausgang gekoppelt ist, wobei das Thermostatventil einen ersten Eingang, einen zweiten Eingang und einen Ausgang aufweist, wobei die Umgehungskühlmittelleitung mit dem ersten Eingang gekoppelt ist; und
einen zweiten Leitungsabschnitt, der zwischen dem Ausgang des Thermostatventils und dem Ladeluftkühler gekoppelt ist,
wobei das Thermostatventil ausgebildet ist, in Abhängigkeit einer Temperatur des Kühlmittels eine Menge von von dem zweiten Eingang zu dem Ausgang des Thermostatventils strömendem Kühlmittel einzustellen.

Die Pumprichtung der Pumpe und die Anordnung oder Montage der Pumpe innerhalb des Kühlmittelkreises kann die Strömungsrichtung definieren. Das T-Stück kann auch als ein Y-Verbinder bezeichnet oder ausgebildet sein. Das T-Stück kann dabei lediglich ein Verzweigungselement des Kühlmittelkreises bezeichnen, in welchem (bei dem T-Stück-Eingang) eintretendes Kühlmittel an zwei Ausgängen (dem ersten T-Stück-Ausgang oder dem zweiten T-Stück-Ausgang) austreten kann. Das T-Stück hat somit drei Öffnungen, die der Klarheit wegen als T-Stück-Eingang und als der erste T-Stück-Ausgang und der zweite T-Stück-Ausgang bezeichnet werden. Die Öffnungen können jedoch strukturell ähnlich oder gleich ausgebildet sein. Ebenso kann das Thermostatventil drei Öffnungen (zum Ein- bzw. Austritt von Kühlmittel) aufweisen, die der Klarheit wegen als ein erster Eingang, ein zweiter Eingang und ein Ausgang bezeichnet werden. Auch die drei Öffnungen des Thermostatventils können strukturell gleich oder ähnlich ausgebildet sein. Das Thermostatventil ist somit in Strömungsrichtung stromabwärts der Umgehungskühlmittelleitung angeordnet.

Die Temperatur des Kühlmittels kann gemessen, abgeschätzt oder durch Simulation bestimmt werden. In dem Kühlmittelkreis können andere Komponenten eines Fahrzeuges angeordnet und somit mittels des Kühlkreises temperiert, insbesondere gekühlt temperiert werden. Z. B. kann ein Einspritzsystem für eine Abgasnachbehandlung oder ein SCR-Dosierventil mittels des Kühlkreises gekühlt werden.

Gemäß einer Ausführungsform ist ein Kühlmittelkreis zum Temperieren von Ladegas für eine Verbrennungskraftmaschine bereitgestellt, aufweisend: einen Ladeluftkühler zum Austausch von Wärme einströmenden Ladegases und eines Kühlmittels zum Bereitstellen von temperiertem Ladegas; eine Pumpe zum Befördern des Kühlmittels entlang einer Strömungsrichtung; einen ersten Leitungsabschnitt in Strömungsrichtung hinter dem Ladeluftkühler; ein T-Stück mit einem T-Stück-Eingang und einem ersten und einem zweiten T-Stück-Ausgang, wobei der T-Stück-Eingang mit dem ersten Leitungsabschnitt gekoppelt ist; eine an den ersten T-Stück-Ausgang gekoppelte Umgehungskühlmittelleitung; ein Thermostatventil, welches einen ersten Eingang, einen zweiten Eingang und einen Ausgang aufweist, wobei die Umgehungskühlmittelleitung mit dem ersten Eingang gekoppelt ist; und einen zweiten Leitungsabschnitt, der zwischen dem Ausgang des Thermostatventils und dem Ladeluftkühler gekoppelt ist, wobei das Thermostatventil ausgebildet ist, in Abhängigkeit einer Temperatur des Kühlmittels eine Menge von von dem zweiten Eingang zu dem Ausgang des Thermostatventils strömendem Kühlmittel einzustellen.

Das Thermostatventil kann gemäß einer Ausführungsform der vorliegenden Erfindung ein mechanisch gesteuertes Thermostatventil umfassen oder sein, welches ausgebildet ist, auf Grund einer Materialwärmeausdehnung einen Grad einer Öffnung zwischen dem zweiten Eingang des Thermostatventils und dem Ausgang des Thermostatventils und/oder zwischen dem ersten Eingang des Thermostatventils und dem Ausgang des Thermostatventils einzustellen. Aufgrund der mechanischen Auslegung des Thermostatventils kann auf eine aufwändige elektronische Steuerung verzichtet werden, was den Kühlmittelkreis vereinfachen und auch eine Zuverlässigkeit erhöhen kann. Z. B. kann sich bei Temperaturerhöhung ein innerhalb des Thermostatventils befindliches Material (z. B. Wachs) in seinem Volumen ausdehnen, was zu einer mechanischen Stellbewegung des Ventils führen kann. D.h., bei dem Thermostatventil kann es sich beispielsweise um ein mechanisches Wachs-Dehn-Thermostat handeln. Auf eine elektrische Energieversorgung des Thermostatventils kann somit vorteilhaft verzichtet werden.

Das Thermostatventil kann ferner ausgebildet sein, den Grad des Öffnens zwischen dem zweiten Eingang des Thermostatventils und dem Ausgang des Thermostatventils in Abhängigkeit der Temperatur des Kühlmittels oberhalb einer vorbestimmten Öffnungsbeginntemperatur zu erhöhen. Wenn die Temperatur des Kühlmittels die Öffnungsbeginntemperatur erreicht oder diese übersteigt, kann eine Kühlung des Kühlmittels erforderlich sein, um so wiederrum das Ladegas geeignet kühlen zu können. Die Öffnungsbeginntemperatur kann z. B. zwischen 40 °C und 45 °C liegen. Wenn die Temperatur des Kühlmittels unterhalb der Öffnungsbeginntemperatur liegt, so kann ein Durchfluss des Kühlmittels von dem zweiten Eingang des Thermostatventils zu dem Ausgang des Thermostatventils durch die Stellung des Thermostatventils reduziert oder gar unterbunden sein. In diesem Fall kann das Kühlmittel im Wesentlichen (oder ausschließlich) durch die Umgehungskühlmittelleitung durch das Thermostatventil und von dort aus durch den Ladeluftkühler strömen, ohne durch einen Kühlmittel-Kühlungsabschnitt zu strömen (welcher ausgangsseitig mit dem zweiten Eingang des Thermostatventils verbunden sein kann).

Oberhalb einer Öffnungsendetemperatur kann der Grad des Öffnens zwischen dem zweiten Eingang des Thermostatventils und dem Ausgang des Thermostatventils maximal sein. Die Öffnungsendetemperatur kann z. B. zwischen 42 °C und 50 °C liegen. Die Öffnungsendetemperatur kann je nach Anwendung, z. B. Dimensionen der Verbrennungskraftmaschine, Dimensionen des Ladeluftkühlers und/oder Dimensionen des Kühlmittel-Kühlungsabschnitts gewählt werden. Damit kann ein Überhitzen des Kühlmittels verhindert werden, während gleichzeitig ein Unterkühlen des Kühlmittels verhindert werden kann.

Das Thermostatventil kann ausgebildet sein, einen Durchtritt von Kühlmittel von dem ersten Eingang des Thermostatventils zu dem Ausgang des Thermostatventils oberhalb einer Temperaturschwelle zu unterbinden. Die Temperaturschwelle kann z. B. die Öffnungsendetemperatur sein. Oberhalb der Temperaturschwelle kann somit nur Kühlmittel, welches zuvor durch den Kühlmittel-Kühlabschnitt geströmt ist, zurück zu dem Ladeluftkühler strömen. Damit kann eine zuverlässige Kühlung des Kühlmittels erreicht werden.

Das Thermostatventil kann auch ausgebildet sein, durch den ersten Eingang des Thermostatventils und durch den zweiten Eingang des Thermostatventils einströmendes Kühlmittel vermischt über den Ausgang des Thermostatventils auszuleiten. Somit kann eine kontinuierliche gleichmäßige Kühlung des Kühlmittels und folglich des Ladegases mittels des Ladeluftkühlers gewährleistet werden. Dadurch können insbesondere Temperaturschwankungen in Komponenten stromabwärts des Thermostatventils reduziert werden, was Beschädigungen vermindern kann und eine Lebensdauer verlängern kann.

Der Kühlmittelkreis kann ferner, gemäß einer Ausführungsform der vorliegenden Erfindung, einen Temperatursensor, der angeordnet und ausgebildet ist, eine Temperatur des temperierten Ladegases und/oder eine Temperatur des Kühlmittels, insbesondere vor Eintritt in den Ladeluftkühler, zu detektieren, und eine Pumpensteuerung aufweisen, die ausgebildet ist, eine Pumpleistung der Pumpe in Abhängigkeit der Temperatur des temperierten Ladegases und/oder der Temperatur des Kühlmittels zu steuern. Der Temperatursensor ist optional, muss somit nicht in allen Ausführungsformen vorgesehen sein. Vorteilhafterweise ermöglicht jedoch ein vorhandener Temperatursensor eine Vorsteuerung der Pumpe hinsichtlich ihrer Förderleistung, wodurch (bei detektierter oder anderweitig bekannter Temperatur des Kühlmittels) auch eine Kühlleistung definiert sein kann. Dabei kann der Temperatursensor z.B. die Temperatur des temperierten Ladegases detektieren, das heißt die Temperatur des durch den Ladeluftkühler geströmten Ladegases. Die Pumpleistung der Pumpe kann mit erhöhter detektierter Temperatur des temperierten Ladegases erhöht werden. Damit kann eine effektive Vorsteuerung der Pumpe hinsichtlich ihrer Förderleistung derart erreicht werden, dass insbesondere das Ladegas nach Wärmeaustausch mit dem Wärmeaustauscher eine bestimmte Sollaustrittstemperatur erreicht.

Der Temperatursensor kann entweder die Temperatur des Ladegases messen oder alternativ direkt im Kühlungskreislauf, also im Kühlmittel, angeordnet sein, um die Kühlmitteltemperatur vor Eintritt in den Ladeluftkühler zu messen. Temperatursensor ist optional und kann zwei Zwecken dienen:
1. Bessere Vorsteuerung der Pumpe durch Kenntnisse der aktuellen Kühlleistung
2. Diagnosefähigkeit/Wartbarkeit: Ausfall der Ladeluftkühlung kann separiert werden in Ausfall des Kühlkreises und Ausfall des Ladeluftkühlers

Der Kühlmittelkreis kann ferner den Kühlmittel-Kühlungsabschnitt (z. B. einen fahrzeugseitigen Niedertemperatur-Kühler) aufweisen, der zwischen dem zweiten T-Stück-Ausgang und dem zweiten Eingang des Thermostatventils gekoppelt ist. Das Kühlmittel kann durch den Kühlmittel-Kühlungsabschnitt strömen und dabei gekühlt werden.

Es sollte verstanden werden, dass Merkmale, welche individuell oder in irgendeiner Kombination im Zusammenhang mit einem Kühlmittelkreis zum Temperaturen von Ladegas für eine Verbrennungskraftmaschine beschrieben, erläutert, eingesetzt oder angewendet wurden, ebenso, individuell oder in irgendeiner Kombination, auf ein Verfahren zum Temperieren von Ladegas für eine Verbrennungskraftmaschine eingesetzt, angewendet oder bereitgestellt werden können gemäß Ausführungsformen der vorliegenden Erfindung und umgekehrt.

Gemäß einem weiteren Aspekt der vorliegenden Erfindung ist ein Verfahren zum Temperieren von Ladegas für eine Verbrennungskraftmaschine, wobei das Verfahren ein Aufteilen eines Kühlmittelstroms auf einen Fahrzeugkühler und einen Bypass, der einen Anteil des Kühlmittelstroms am Fahrzeugkühler vorbeiführt, umfasst, wobei der Aufteilungsgrad auf einer Mischtemperatur beruht, die auf einer Mischung von Kühlmittel, das den Fahrzeugkühler durchlaufen hat, mit dem Kühlmittel, das dem Fahrzeugkühler vorbeigeführt wurde, beruht.

Gemäß einer anderen Ausgestaltung ist ein Verfahren zum Temperieren von Ladegas für eine Verbrennungskraftmaschine bereitgestellt, wobei das Verfahren aufweist:
Austauschen von Wärme einströmenden Ladegases und eines Kühlmittels mittels eines Ladeluftkühlers zum Bereitstellen von temperiertem Ladegas;
Befördern des Kühlmittels entlang einer Strömungsrichtung in einem Kühlkreis, der den Ladeluftkühler, eine Umgehungskühlmittelleitung zum Umgehen eines Kühlmittel-Kühlungsabschnitts und ein Thermostatventil in Strömungsrichtung stromabwärts der Umgehungskühlmittelleitung umfasst.

Gemäß einer Ausführungsform der vorliegenden Erfindung ist ein Verfahren zum Temperieren von Ladegas für eine Verbrennungskraftmaschine, wobei das Verfahren aufweist: Austauschen von Wärme einströmenden Ladegases und eines Kühlmittels mittels eines Ladeluftkühlers zum Bereitstellen von temperiertem Ladegas; Befördern des Kühlmittels entlang einer Strömungsrichtung in einem Kühlkreis, der den Ladeluftkühler, einen ersten Leitungsabschnitt in Strömungsrichtung hinter dem Ladeluftkühler, ein T-Stück mit einem T-Stück-Eingang, der mit dem ersten Leitungsabschnitt gekoppelt ist, und mit einem ersten und einem zweiten T-Stück-Ausgang, eine an den ersten T-Stück-Ausgang gekoppelte Umgehungskühlmittelleitung, ein Thermostatventil mit einem ersten Eingang, einem zweiten Eingang und einem Ausgang, und einen zweiten Leitungsabschnitt aufweist, der zwischen dem Ausgang des Thermostatventils und dem Ladeluftkühler gekoppelt ist, wobei die Umgehungskühlmittelleitung mit dem ersten Eingang des Thermostatventils gekoppelt ist; und Einstellen, mittels des Thermostatventils, in Abhängigkeit einer Temperatur des Kühlmittels, einer Menge von von dem zweiten Eingang zu dem Ausgang des Thermostatventils strömendem Kühlmittel.

Dabei kann effektiv verhindert werden, dass eine Temperatur des Kühlmittels zu weit absinkt, wobei insbesondere verhindert werden kann, dass es zu Versottungen oder Vereisungseffekten des Kühlmittels kommt.

Ausführungsformen der vorliegenden Erfindung werden nun mit Bezug auf die beiliegenden Zeichnungen erläutert. Die Erfindung ist nicht auf die illustrierten oder beschriebenen Ausführungsformen beschränkt.
Fig. 1 illustriert schematisch einen Kühlmittelkreis zum Temperieren von Ladegas für eine Verbrennungskraftmaschine gemäß einer Ausführungsform der vorliegenden Erfindung, und
Fig. 2 illustriert schematisch ein Verfahren zum Temperieren von Ladegas für eine Verbrennungskraftmaschine gemäß einer Ausführungsform der vorliegenden Erfindung.

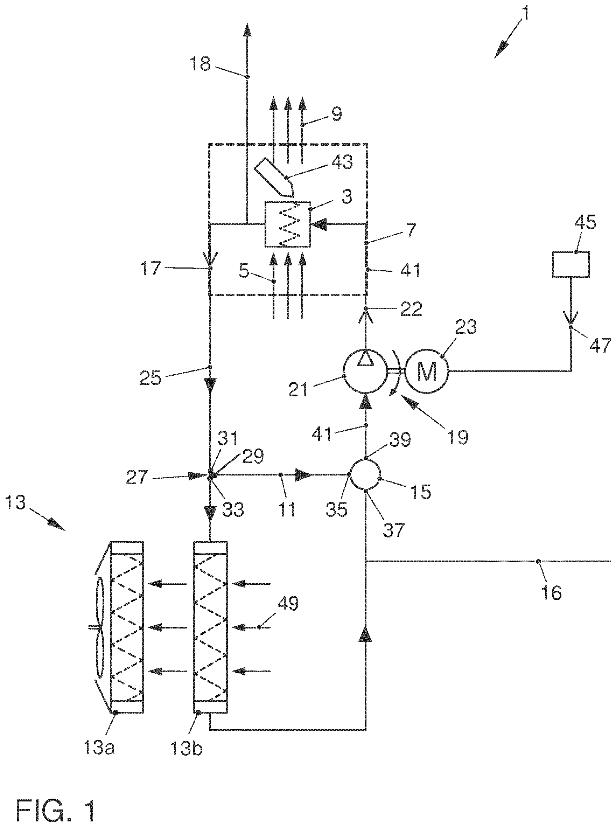

Der schematisch in **Fig. 1** illustrierte Kühlmittelkreis 1 gemäß einer Ausführungsform der vorliegenden Erfindung umfasst einen Ladeluftkühler 3 zum Austausch von Wärme einströmenden Ladegases 5 und eines Kühlmittels 7 zum Bereitstellen von temperiertem Ladegas 9. Der Kühlmittelkreis 1 weist ferner eine Umgehungskühlmittelleitung (auch Bypass genannt) 11 auf zum Umgehen eines Kühlmittel-Kühlungsabschnitts 13. Ferner weist der Kühlmittelkreis 1 ein Thermostatventil 15 in Strömungsrichtung 17 stromabwärts der Umgehungskühlmittelleitung 11 auf. Der Kühlmittel-Kühlungsabschnitt 13 umfasst einen Kühler 13a (Hauptkühler), der einem Hochtemperaturkreislauf (in Fig. 1 nicht gezeigt) zuzurechnen ist, und einen Kühler 13b, der dem Kühlmittelkreis 1 (Niedertemperaturkreis) zuzurechnen ist.

Der Kühlmittelkreis 1 ist zum Temperieren von Ladegas 5 für eine Verbrennungskraftmaschine ausgelegt und weist dazu ein Thermostatventil 15 auf, das dazu ausgelegt ist, einen Kühlmittelstrom auf einen Fahrzeugkühler 13 und eine Umgehungskühlmittelleitung 11 aufzuteilen, der einen Anteil des Kühlmittelstroms am Fahrzeugkühler 13 vorbeiführt, wobei das Thermostatventil 15 auf eine Mischtemperatur reagiert, die auf einer Mischung von Kühlmittel, das den Fahrzeugkühler 13 durchlaufen hat, mit dem Kühlmittel, das an dem Fahrzeugkühler 13 vorbeigeführt wurde, beruht.

Der Kühlmittelkreis 1 weist ferner eine Pumpe 19 mit Pumpmechanik 21 und einem Motor 23 auf, welche zum Befördern des Kühlmittels 7 entlang der Strömungsrichtung 17 angeordnet und ausgebildet ist. Ferner weist der Kühlmittelkreis 1 einen ersten Leitungsabschnitt 25 in Strömungsrichtung 17 hinter dem Ladeluftkühler 3 auf. Ferner weist der Kühlmittelkreis 1 ein T-Stück 27 mit einem T-Stück-Eingang 29 und einem ersten T-Stück-Ausgang 31 und einem zweiten T-Stück-Ausgang 33 auf, wobei der T-Stück-Eingang 29 mit dem ersten Leitungsabschnitt 25 gekoppelt ist.

Ferner weist das Thermostatventil 15 einen ersten Eingang 35, einen zweiten Eingang 37 und einen Ausgang 39 auf, wobei die Umgehungskühlmittelleitung 11 mit dem ersten Eingang 35 des Thermostatventils 15 gekoppelt ist. Der Kühlmittelkreis 1 weist ferner einen zweiten Leitungsabschnitt 41 auf (in welchem die Pumpe 19 angeordnet ist), der zwischen dem Ausgang 39 des Thermostatventils 15 und dem Ladeluftkühler 3 gekoppelt ist. Das Thermostatventil 15 ist ausgebildet, in Abhängigkeit einer Temperatur des Kühlmittels 7 eine Menge von von dem zweiten Eingang 37 zu dem Ausgang 39 des Thermostatventils strömendem Kühlmittel 7 einzustellen.

Die in Fig. 1 illustrierte Ausführungsform des Kühlmittelkreises 1 weist ferner einen (optionalen) Temperatursensor 43 auf, der angeordnet und ausgebildet ist, eine Temperatur des temperierten Ladegases 9 zu detektieren. In anderen Ausführungsformen kann zusätzlich oder alternativ ein Temperatursensor vorgesehen sein, der die Temperatur des Kühlmittels vor Eintritt in den Ladeluftkühler 3 misst. Ferner weist der Kühlmittelkreis 1 eine Pumpensteuerung 45 auf, welche ausgebildet ist, insbesondere durch ein Steuersignal 47 eine Pumpleistung der Pumpe 19 in Abhängigkeit der Temperatur des temperierten Ladegases 9 zu steuern.

Ferner umfasst der in Fig. 1 illustrierte Kühlmittelkreis 1 einen Kühlmittel-Kühlungsabschnitt 13, welcher z. B. durch einen fahrzeugseitigen (insbesondere Niedertemperatur-) Kühler gebildet sein kann. Dabei kann der Kühlmittel-Kühlungsabschnitt 13 von Umgebungsluft 49 gekühlt sein, indem die Umgebungsluft 49 über eine große äußere Oberfläche eines Leitungsgeflechts strömt, in welchem das Kühlmittel 7 gefördert wird.

Der Kühlmittelkreis kann über eine oder mehrere Entlüftungsleitungen entlüftet werden. Diese Entlüftungsleitungen können als einzelne Leitung direkt an einem AGB (Ausgleichsbehälter) gekoppelt sein oder mehrere Entlüftungsleitungen können den Kühlmittelkreis und den AGB koppeln. Die Entlüftung kann beispielsweise wahlweise oder kombiniert über die Leitung 16 zwischen dem Kühlmittel-Kühlungsabschnitt 13 und dem Thermostatventil 15 und der Entlüftungsleitung 18 erfolgen. Hierfür ist zwischen dem Kühlmittel-Kühlungsabschnitt 13 und dem Thermostatventil 15 eine Leitung 16 vom AGB gekoppelt. Der Kühlmittelkreis kann auch über eine Entlüftungsleitung 18 entlüftet werden.

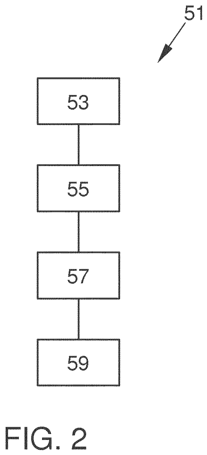

Der Kühlmittelkreis 1 kann ausgebildet sein, ein Verfahren 51, wie es in **Fig. 2** schematisch illustriert ist, auszuführen.

In einem Verfahrensschritt 53 des Verfahrens 51 zum Temperieren von Ladegas (z. B. Ladegas 5) für eine Verbrennungskraftmaschine erfolgt ein Aufteilen eines Kühlmittelstroms auf einen Fahrzeugkühler 13 und einen Bypass 11, der einen Anteil des Kühlmittelstroms am Fahrzeugkühler 13 vorbeiführt, wobei der Aufteilungsgrad auf einer Mischtemperatur beruht, die auf einer Mischung von Kühlmittel, das den Fahrzeugkühler 13 durchlaufen hat, mit dem Kühlmittel, das dem Fahrzeugkühler 13 vorbeigeführt wurde, beruht.

Ferner kann das Verfahren 51 die Schritte 55, 57 und 59 umfassen. In Schritt 55 erfolgt ein Austauschen von Wärme einströmenden Ladegases und eines Kühlmittels mittels eines Ladeluftkühlers zum Betreiben von temperiertem Ladegas. In einem Verfahrensschritt 57 erfolgt ein Befördern des Kühlmittels entlang einer Strömungsrichtung in einem Kühlkreis, der den Ladeluftkühler, eine Umgehungskühlmittelleitung zum Umgehen eines Kühlmittel-Kühlungsabschnitts und ein Thermostatventil in Strömungsrichtung stromabwärts der Umgehungskühlmittelleitung umfasst. In einem weiteren Verfahrensschritt 59 erfolgt ein Einstellen mittels des Thermostatventils, in Abhängigkeit einer Temperatur des Kühlmittels, einer Menge von von dem zweiten Eingang zu dem Ausgang des Thermostatventils strömendem Kühlmittel.

Bei einem Einsatz des Thermostatventils 15 in Flussrichtung des Kühlmittels 7 hinter dem Bypass 11 und dem fahrzeugseitigen Kühler 13 kann ein in dem Thermostatventil umfasstes Wachsdehnelement die Regelung der Mischtemperatur gestalten. Damit können eine Temperatursensierung sowie eine Regelung durch ein Steuergerät entfallen, was den Kühlmittelkreis vereinfachen kann. Bei Einsatz des Thermostatventils 15 in Flussrichtung des Kühlmittels 7 hinter dem Bypass 11 und dem fahrzeugseitigen Kühler 13 kann das Thermostatventil das aus dem Bypass 11 und dem fahrzeugseitigen Kühler 13 in das Thermostatventil 15 strömende Kühlmittel vermischen und die Mischtemperatur kann durch das Thermostatventil 15 geregelt werden. Damit kann ein höherer Kühlmittelstrom durch die Misch- und Regeleigenschaften des Thermostatventils 15 erreicht werden. Damit sind auch höhere Solltemperaturen des temperierten (insbesondere gekühlten) Ladegases ermöglicht.

Der Öffnungsbeginn und der Öffnungswinkel des Thermostatventils 15 können passend zur Solltemperatur des Kühlmittels gewählt werden. Bei Einsatz des Thermostatventils in Flussrichtung des Kühlmittels vor dem Bypass und vor dem fahrzeugseitigen Kühler sind die Durchmischungsergebnisse durch ein entsprechendes T-Stück hinter dem Bypass und fahrzeugseitigen Kühler zu erreichen und der Öffnungsbeginn und der Öffnungswinkel des Thermostatventils sind entsprechend anzupassen. Über die Kreisförderung kann die Regelinformation an das Thermostatventil verzögert eingebracht werden. Bei Systemen mit geringer Dynamik kann dies ausreichend sein.

Ausführungsformen der vorliegenden Erfindung stellen einen Kühlmittelkreis und ein entsprechendes Temperierverfahren bereit, welche die im Stand der Technik bisweilen auftretenden Probleme bei geringen Außentemperaturen robust und preiswert lösen können. Durch die Möglichkeit höhere Saugrohrtemperaturen erreichen zu können, kann zudem ein CO₂-mindernder Effekt ermöglicht sein.

### Bezugszeichenliste

- 1: Kühlmittelkreis
- 3: Ladeluftkühler
- 5: Ladegas
- 7: Kühlmittel
- 9: temperiertes Ladegas
- 11: Umgehungskühlmittelleitung (Bypass)
- 13: Kühlmittel-Kühlungsabschnitt (z.B. Fahrzeugkühler)
- 13a: Kühler des Hochtemperaturkreislaufs (Hauptkühler)
- 13b: Kühler des Niedertemperaturkreis
- 15: Thermostatventil
- 16: Leitung vom Ausgleichsbehälter (AGB)
- 17: Strömungsrichtung
- 18: Entlüftungsleitung
- 19: Pumpe
- 21: Pumpmechanik
- 23: Pumpmotor
- 25: erster Leitungsabschnitt
- 27: T-Stück (Y-Element)
- 29: T-Stück-Eingang
- 31: erster T-Stück-Ausgang
- 33: zweiter T-Stück-Ausgang
- 35: erster Eingang des Thermostatventils
- 37: zweiter Eingang des Thermostatventils
- 39: Ausgang des Thermostatventils
- 41: zweiter Leitungsabschnitt
- 43: Temperatursensor
- 45: Pumpensteuerung
- 47: Pumpensteuersignal
- 49: Umgebungsluft
- 51: Verfahren
- 53: Verfahrensschritt
- 55: Verfahrensschritt
- 57: Verfahrensschritt

## Patentansprüche

1. Kühlmittelkreis (1) zum Temperieren von Ladegas (5) für eine Verbrennungskraftmaschine, aufweisend ein Thermostatventil (15), das dazu ausgelegt ist, einen Kühlmittelstrom auf einen Fahrzeugkühler (13) und eine Umgehungskühlmittelleitung (11) aufzuteilen, die einen Anteil des Kühlmittelstroms am Fahrzeugkühler (13) vorbeiführt, wobei das Thermostatventil (15) auf eine Mischtemperatur reagiert, die auf einer Mischung von Kühlmittel, das den Fahrzeugkühler (13) durchlaufen hat, mit dem Kühlmittel, das an dem Fahrzeugkühler (13) vorbeigeführt wurde, beruht, wobei der Kühlmittelkreis ferner aufweist:
einen Ladeluftkühler (3), der dazu ausgelegt ist, Wärme zwischen dem gemischten Kühlmittel und dem Ladegas (5) auszutauschen;
eine Pumpe (19) zum Befördern des Kühlmittels (7) entlang einer Strömungsrichtung (17);
einen ersten Leitungsabschnitt (25) in Strömungsrichtung (17) hinter dem Ladeluftkühler (3);
ein Verzweigungselement (27) mit einem Verzweigungselement -Eingang (29) und einem ersten Verzweigungselement -Ausgang (31) und einem zweiten Verzweigungselement - Ausgang (33), wobei der Verzweigungselement -Eingang (29) mit dem ersten Leitungsabschnitt (25) gekoppelt ist, wobei die Umgehungskühlmittelleitung (11) an den ersten Verzweigungselement -Ausgang (31) gekoppelt ist, wobei das Thermostatventil (15) einen ersten Eingang (35), einen zweiten Eingang (37) und einen Ausgang (39) aufweist, wobei die Umgehungskühlmittelleitung (11) mit dem ersten Eingang (35) gekoppelt ist; und
einen zweiten Leitungsabschnitt (41), der zwischen dem Ausgang (39) des Thermostatventils (15) und dem Ladeluftkühler (3) gekoppelt ist,
**dadurch gekennzeichnet, dass**
das Thermostatventil (15) ausgebildet ist, in Abhängigkeit einer Temperatur des Kühlmittels (7) eine Menge von dem zweiten Eingang (37) zu dem Ausgang (39) des Thermostatventils (15) strömendem Kühlmittel (7) einzustellen.

2. Kühlmittelkreis gemäß Anspruch 1, wobei das Thermostatventil (15) ein mechanisch gesteuertes Thermostatventil umfasst, welches ausgebildet ist, aufgrund einer Materialwärmeausdehnung einen Grad einer Öffnung zwischen dem zweiten Eingang (37) des Thermostatventils und dem Ausgang (39) des Thermostatventils und/oder zwischen dem ersten Eingang (35) des Thermostatventils und dem Ausgang (39) des Thermostatventils einzustellen.

3. Kühlmittelkreis gemäß dem vorangehenden Anspruch, wobei das Thermostatventil (15) ferner ausgebildet ist, den Grad des Öffnens zwischen dem zweiten Eingang (37) des Thermostatventils und dem Ausgang (39) des Thermostatventils in Abhängigkeit der Temperatur des Kühlmittels oberhalb einer vorbestimmten Öffnungsbeginntemperatur zu erhöhen, wobei die Öffnungsbeginntemperatur insbesondere zwischen 40°C und 45°C liegt.

4. Kühlmittelkreis gemäß einem der Ansprüche 2 bis 3, wobei oberhalb einer Öffnungsendetemperatur der Grad des Öffnens zwischen dem zweiten Eingang (37) des Thermostatventils und dem Ausgang (39) des Thermostatventil maximal ist, wobei die Öffnungsendetemperatur zwischen 42°C und 50°C liegt.

5. Kühlmittelkreis gemäß einem der vorangehenden Ansprüche 1 bis 4, wobei das Thermostatventil (15) ausgebildet ist, einen Durchtritt von Kühlmittel (7) von dem ersten Eingang (35) des Thermostatventils zu dem Ausgang (39) des Thermostatventils oberhalb einer Temperaturschwelle zu unterbinden.

6. Kühlmittelkreis gemäß einem der vorangehenden Ansprüche 1 bis 4, wobei das Thermostatventil ausgebildet ist, durch den ersten Eingang (35) des Thermostatventils und durch den zweiten Eingang (37) des Thermostatventils einströmendes Kühlmittel (7) vermischt über den Ausgang (39) des Thermostatventils auszugeben.

7. Kühlmittelkreis gemäß einem der vorangehenden Ansprüche, wobei es sich bei dem Thermostatventil (15) um ein mechanisches Wachs-Dehn-Thermostatventil handelt.

8. Kühlmittelkreis gemäß einem der vorangehenden Ansprüche, ferner aufweisend:
einen Temperatursensor (43), der angeordnet und ausgebildet ist, eine Temperatur des temperierten Ladegases (9) und/oder eine Temperatur des Kühlmittels, insbesondere vor Eintritt in den Ladeluftkühler, zu detektieren; und
eine Pumpensteuerung (43), die ausgebildet ist, eine Pumpleistung der Pumpe (19) in Abhängigkeit der Temperatur des temperierten Ladegases (9) und/oder der Temperatur des Kühlmittels zu steuern.

9. Kühlmittelkreis gemäß einem der vorangehenden Ansprüche, ferner aufweisend:
einen Kühlmittel-Kühlungsabschnitt (13), der zwischen dem zweiten T-Stück-Ausgang (33) und dem zweiten Eingang (37) des Thermostatventils (15) gekoppelt ist.

10. Verfahren zum Temperieren von Ladegas (5) für eine Verbrennungskraftmaschine mittels eines Kühlkreises nach einem der vorherigen Ansprüche, wobei das Verfahren ein Aufteilen eines Kühlmittelstroms auf einen Fahrzeugkühler (13) und eine Umgehungskühlmittelleitung (11), der einen Anteil des Kühlmittelstroms am Fahrzeugkühler (13) vorbeiführt, umfasst, wobei der Aufteilungsgrad auf einer Mischtemperatur beruht, die auf einer Mischung von Kühlmittel, das den Fahrzeugkühler (13) durchlaufen hat, mit dem Kühlmittel, das an dem Fahrzeugkühler (13) vorbeigeführt wurde, beruht.

## Claims

1. Coolant circuit (1) for controlling the temperature of charge gas (5) for an internal combustion engine, having a thermostatic valve (15) which is designed to divide a coolant flow between a vehicle radiator (13) and a bypass coolant line (11) which guides a portion of the coolant flow past the vehicle radiator (13), wherein the thermostatic valve (15) reacts to a mixing temperature which is based on a mixture of coolant that has passed through the vehicle radiator (13) with the coolant that has been guided past the vehicle radiator (13), wherein the coolant circuit also has:
a charge-air cooler (3) which is designed to exchange heat between the mixed coolant and the charge gas (5);
a pump (19) for conveying the coolant (7) along a direction of flow (17);
a first line section (25) downstream of the charge-air cooler (3) in the direction of flow (17);
a branching element (27) having a branching-element inlet (29) and a first branching-element outlet (31) and a second branching-element outlet (33), wherein the branching-element inlet (29) is coupled to the first line section (25), wherein the bypass coolant line (11) is coupled to the first branching-element outlet (31), wherein the thermostatic valve (15) has a first inlet (35), a second inlet (37) and an outlet (39), wherein the bypass coolant line (11) is coupled to the first inlet (35); and
a second line section (41) which is coupled between the outlet (39) of the thermostatic valve (15) and the charge-air cooler (3),
**characterized in that** the thermostatic valve (15) is designed to set a quantity of coolant (7) flowing from the second inlet (37) to the outlet (39) of the thermostatic valve (15) in accordance with a temperature of the coolant (7).

2. Coolant circuit according to Claim 1, wherein the thermostatic valve (15) comprises a mechanically controlled thermostatic valve which is designed to set, on the basis of a material thermal expansion, a degree of opening between the second inlet (37) of the thermostatic valve and the outlet (39) of the thermostatic valve and/or between the first inlet (35) of the thermostatic valve and the outlet (39) of the thermostatic valve.

3. Coolant circuit according to the preceding claim, wherein the thermostatic valve (15) is also designed to increase the degree of opening between the second inlet (37) of the thermostatic valve and the outlet (39) of the thermostatic valve in accordance with the temperature of the coolant above a predetermined start-of-opening temperature, wherein the start-of-opening temperature lies in particular between 40°C and 45°C.

4. Coolant circuit according to either of Claims 2 and 3, wherein, above an end-of-opening temperature, the degree of opening between the second inlet (37) of the thermostatic valve and the outlet (39) of the thermostatic valve is at a maximum, wherein the end-of-opening temperature lies between 42°C and 50°C.

5. Coolant circuit according to any of the preceding Claims 1 to 4, wherein the thermostatic valve (15) is designed to prevent coolant (7) from passing through from the first inlet (35) of the thermostatic valve to the outlet (39) of the thermostatic valve above a temperature threshold.

6. Coolant circuit according to any of the preceding Claims 1 to 4, wherein the thermostatic valve is designed to discharge coolant (7) flowing in through the first inlet (35) of the thermostatic valve and through the second inlet (37) of the thermostatic valve in a mixed state via the outlet (39) of the thermostatic valve.

7. Coolant circuit according to any of the preceding claims, wherein the thermostatic valve (15) is a mechanical wax-expansion thermostatic valve.

8. Coolant circuit according to any of the preceding claims, also having:
a temperature sensor (43) which is arranged and designed to detect a temperature of the temperature-controlled charge gas (9) and/or a temperature of the coolant, in particular before entering the charge-air cooler; and
a pump controller (43) which is designed to control a pump output of the pump (19) depending on the temperature of the temperature-controlled charge gas (9) and/or the temperature of the coolant.

9. Coolant circuit according to any of the preceding claims, also having:
a coolant cooling section (13) which is coupled between the second T-piece outlet (33) and the second inlet (37) of the thermostatic valve (15).

10. Method for controlling the temperature of charge gas (5) for an internal combustion engine by means of a cooling circuit according to any of the preceding claims, wherein the method comprises dividing a coolant flow between a vehicle radiator (13) and a bypass coolant line (11) which guides a portion of the coolant flow past the vehicle radiator (13), wherein the degree of division is based on a mixing temperature which is based on a mixture of coolant that has passed through the vehicle radiator (13) with the coolant that has been guided past the vehicle radiator (13).

## Revendications

1. Circuit de réfrigérant (1) pour réguler en température un gaz de suralimentation (5) pour un moteur à combustion interne, présentant une valve thermostatique (15), qui est conçue pour répartir un courant de réfrigérant entre un radiateur de véhicule (13) et une conduite de réfrigérant de dérivation (11) qui amène une partie du courant de réfrigérant à contourner le radiateur de véhicule (13), la valve thermostatique (15) réagissant à une température de mélange qui est basée sur un mélange du réfrigérant qui a traversé le radiateur de véhicule (13) avec le réfrigérant qui a contourné le radiateur de véhicule (13), le circuit de réfrigérant présentant en outre :
un refroidisseur d'air de suralimentation (3), qui est conçu pour échanger de la chaleur entre le réfrigérant mélangé et le gaz de suralimentation (5) ;
une pompe (19) pour transporter le réfrigérant (7) le long d'une direction d'écoulement (17) ;
une première section de conduite (25) dans la direction d'écoulement (17) après le refroidisseur d'air de suralimentation (3) ;
un élément de dérivation (27) ayant une entrée d'élément de dérivation (29) et une première sortie d'élément de dérivation (31) et une deuxième sortie d'élément de dérivation (33), l'entrée d'élément de dérivation (29) étant couplée à la première section de conduite (25), la conduite de réfrigérant de dérivation (11) étant couplée à la première sortie d'élément de dérivation (31), la valve thermostatique (15) présentant une première entrée (35), une deuxième entrée (37) et une sortie (39), la conduite de réfrigérant de dérivation (11) étant couplée à la première entrée (35) ; et
une deuxième section de conduite (41), qui est couplée entre la sortie (39) de la valve thermostatique (15) et le refroidisseur d'air de suralimentation (3), **caractérisé en ce que**
la valve thermostatique (15) est configurée pour ajuster, en fonction d'une température du réfrigérant (7), une quantité de réfrigérant (7) s'écoulant de la deuxième entrée (37) vers la sortie (39) de la valve thermostatique (15).

2. Circuit de réfrigérant selon la revendication 1, dans lequel la valve thermostatique (15) comprend une valve thermostatique à commande mécanique qui est configurée pour ajuster un degré d'ouverture entre la deuxième entrée (37) de la valve thermostatique et la sortie (39) de la valve thermostatique et/ou entre la première entrée (35) de la valve thermostatique et la sortie (39) de la valve thermostatique en raison d'une dilatation thermique du matériau.

3. Circuit de réfrigérant selon la revendication précédente, dans lequel la valve thermostatique (15) est en outre configurée pour augmenter le degré d'ouverture entre la deuxième entrée (37) de la valve thermostatique et la sortie (39) de la valve thermostatique en fonction de la température du réfrigérant au-dessus d'une température de début d'ouverture prédéterminée, la température de début d'ouverture étant notamment comprise entre 40 °C et 45 °C.

4. Circuit de réfrigérant selon l'une quelconque des revendications 2 à 3, dans lequel, au-dessus d'une température de fin d'ouverture, le degré d'ouverture entre la deuxième entrée (37) de la valve thermostatique et la sortie (39) de la valve thermostatique est maximal, la température de fin d'ouverture étant comprise entre 42 °C et 50 °C.

5. Circuit de réfrigérant selon l'une quelconque des revendications 1 à 4 précédentes, dans lequel la valve thermostatique (15) est configurée pour interdire un passage de réfrigérant (7) de la première entrée (35) de la valve thermostatique vers la sortie (39) de la valve thermostatique au-dessus d'un seuil de température.

6. Circuit de réfrigérant selon l'une quelconque des revendications 1 à 4 précédentes, dans lequel la valve thermostatique est configurée pour délivrer du réfrigérant (7) entrant par la première entrée (35) de la valve thermostatique et par la deuxième entrée (37) de la valve thermostatique, mélangé, par la sortie (39) de la valve thermostatique.

7. Circuit de réfrigérant selon l'une quelconque des revendications précédentes, dans lequel la valve thermostatique (15) consiste en une valve thermostatique mécanique à dilatation de cire.

8. Circuit de réfrigérant selon l'une quelconque des revendications précédentes, présentant en outre :
un capteur de température (43), qui est agencé et configuré pour détecter une température du gaz de suralimentation régulé en température (9) et/ou une température du réfrigérant, notamment avant l'entrée dans le refroidisseur d'air de suralimentation ; et
une commande de pompe (43), qui est configurée pour commander une puissance de pompage de la pompe (19) en fonction de la température du gaz de suralimentation régulé en température (9) et/ou de la température du réfrigérant.

9. Circuit de réfrigérant selon l'une quelconque des revendications précédentes, présentant en outre :
une section de refroidissement de réfrigérant (13), qui est couplée entre la deuxième sortie de raccord en T (33) et la deuxième entrée (37) de la valve thermostatique (15).

10. Procédé de régulation en température d'un gaz de suralimentation (5) pour un moteur à combustion interne au moyen d'un circuit de réfrigérant selon l'une quelconque des revendications précédentes, le procédé comprenant une répartition d'un courant de réfrigérant entre un radiateur de véhicule (13) et une conduite de réfrigérant de dérivation (11) qui amène une partie du courant de réfrigérant à contourner le radiateur de véhicule (13), le degré de répartition étant basé sur une température de mélange basée sur un mélange du réfrigérant qui a traversé le radiateur de véhicule (13) avec le réfrigérant qui a contourné le radiateur de véhicule (13).
